# EUROPÄISCHE PATENTSCHRIFT

(11) **EP 2 050 961 B1**
(45) Veröffentlichungstag und Bekanntmachung des Hinweises auf die Patenterteilung: **26.06.2013**
(21) Anmeldenummer: 08017751.2
(22) Anmeldetag: 09.10.2008
(51) Int. Cl.: F04B 49/00

(54) **Hydraulisches Antriebssystem**
Hydraulic drive system
Système d'entraînement hydraulique

(30) Priorität: 19.10.2007 DE 202007014676 U
(43) Veröffentlichungstag der Anmeldung: 22.04.2009
(73) Patentinhaber: Liebherr-Machines Bulle SA, 1630 Bulle (CH)
(72) Erfinder: Deeken, Michael, Dipl.-Ing., 1635 La Tour-de-Trême (CH); Gliniorz, Volker, Dipl.-Ing., 79106 Freiburg im Breisgau (DE)
(74) Vertreter: Laufhütte, Dieter

(56) Entgegenhaltungen:
- EP-A2- 0 065 304
- DE-A1- 3 729 495
- DE-A1- 4 111 500
- DE-A1- 4 327 313
- DE-A1- 10 033 803
- DE-C- 973 010

## Beschreibung

Die vorliegende Erfindung betrifft ein hydraulisches Antriebssystem mit einer druckgeregelten Hydraulikpumpe zur Bereitstellung eines Systemdruckes und einem sekundär geregelten Hydraulikmotor.

Bei solchen sekundär geregelten hydraulischen Antriebssystemen stellt die Hydraulikpumpe, welche als Verstellpumpe ausgeführt ist, mit Hilfe einer Druckregelung einen Systemdruck im Leitungsnetz bereit, welcher am Hydraulikmotor anliegt. Der Hydraulikmotor, welcher als Verstellmotor ausgeführt ist, treibt dann drehzahl-, drehmoment- und/oder drehwinkelgeregelt einen Verbraucher an. Ein solches sekundär geregeltes hydraulisches Antriebssystem umfasst somit eine druckgeregelte Verstellpumpe als Primäreinheit und einen drehzahl-, drehmoment- und/oder drehwinkelgeregelten Verstellmotor als Sekundäreinheit. Einem solchen hydraulischen Antriebssystem kann dabei noch ein mechanisches Getriebe vorgeschaltet werden, welches eine Antriebseinheit wie z. B. einen Verbrennungsmotor mit der Hydraulikpumpe verbindet.

Für ein sekundär geregeltes hydraulisches Antriebssystem ergeben sich üblicherweise die folgenden Ausführungen der Komponenten:
- Für den Aufbau eines einfachen sekundär geregelten Fahrantriebs werden üblicherweise Axialkolbeneinheiten in Schrägscheibenbauart verwendet, wobei für den Hydraulikmotor und die Hydraulikpumpe jedoch auch jede andere verstellbare hydraulische Verdrängermaschinen eingesetzt werden können.
- Die Hydraulikpumpe muss von 0 auf maximales Fördervolumen verstellt werden können.
- Der Hydraulikmotor muss von einem maximalen negativen Schluckvolumen auf ein maximales positives Schluckvolumen verstellt werden können, wenn die Vorrichtung mit Hilfe des hydraulischen Antriebssystems sowohl beschleunigt als auch abgebremst werden soll. Der Hydraulikmotor muss also von 0 sowohl auf ein maximales negatives und auf ein maximales positives Schluck- bzw. Fördervolumen verstellbar sein.
- Die druckgeregelte Hydraulikpumpe fördert exakt den Ölvolumenstrom in das Leitungsnetz, welcher benötigt wird, um den Systemdruck im Leitungsnetz auf einen Soll-Systemdruck zu halten. Dabei ist bei bekannten sekundär geregelten hydraulischen Antriebssystemen der Systemdruck unabhängig von der Ölvolumenstromentnahme durch den Hydraulikmotor.
- Das Abtriebsmoment des Hydraulikmotors, welcher üblicherweise in Axialkolbenbauweise aufgebaut ist, steht dabei in proportionalem Zusammenhang zu dem eingestellten Schluckvolumen und dem anliegenden Versorgungsdruck, welcher als Systemdruck von der Hydraulikpumpe bereitgestellt wird. Die Drehzahlregelung des Hydraulikmotors regelt das Schluckvolumen des Hydraulikmotors dann exakt so, dass sein Abtriebsmoment den Antriebsstrang der anzutreibenden Vorrichtung auf die vom Bediener gewünschte Drehzahl beschleunigt, verzögert oder auf der Drehzahl hält. Je nach eingestelltem Schluckvolumen entnimmt der Hydraulikmotor dabei dem Leitungsnetz den erforderlichen Volumenstrom. Erfordert die Drehzahlvorgabe des Bedieners eine Verzögerung des Antriebsstranges, so wechselt der Hydromotor seine Schluckrichtung und arbeitet im Pumpenbetrieb, so dass er Ölvolumen in das Leitungsnetz pumpt und so die mit dem Hydraulikmotor verbundene Vorrichtung bremst. Ebenso ist neben einer solchen Drehzahlregelung auch eine Drehmoment- oder Drehwinkelregelung des Hydraulikmotors denkbar.
- Vorteilhafterweise ist dabei im Hydraulikkreislauf aus Hydraulikpumpe und Hydraulikmotor ein Hochdruckspeicher vorgesehen, welcher hydraulische Energie temporär speichern kann. Steigt der Systemdruck, beispielsweise, in dem der Hydraulikmotor im Pumpenbetrieb arbeitet, so nimmt der Hochdruckspeicher Ölvolumen auf und kann es dann zu einem späteren Zeitpunkt in das Leitungsnetz zurückgeben. Hierdurch lässt sich bei sekundär geregelten hydraulischen Antriebssystemen gegenüber primär geregelten hydraulischen Antriebssystemen eine erhebliche Energieeinsparung verwirklichen.

Solche sekundär geregelten hydraulischen Antriebssysteme können dabei z. B. als hydrostatisches Getriebe in einem Fahrantrieb eines Fahrzeugs eingesetzt werden, beispielsweise für Erdbewegungsmaschinen. Hydraulische Antriebssysteme, insbesondere hydrostatische Fahrantriebe, müssen dabei üblicherweise ein breites Leistungsspektrum abdecken können, das heißt der Antrieb muss sowohl kleinen Leistungsanforderungen (kleine Geschwindigkeiten und Beschleunigungen bei kleinen Antriebsmomenten) und großen Leistungsanforderungen (große Geschwindigkeiten und Beschleunigungen bei großen Antriebsmomenten) innerhalb vorgegebener Leistungsgrenzen gerecht werden.

Beispielsweise bei hydrostatischen Fahrantrieben benötigt der Antrieb für einen typischen Fahrzyklus während der Anfahrphase ein großes Abtriebsmoment, um das Fahrzeug, wie z. B. eine Erdbewegungsmaschine, auf die gewünschte Geschwindigkeit zu beschleunigen. Während der Fahrt mit der erreichten Geschwindigkeit benötigt der Fahrantrieb dagegen nur noch ein kleines Abtriebsmoment, um die Maschine auf Geschwindigkeit zu halten. Ähnliche Belastungszyklen ergeben sich auch bei einer Vielzahl anderer Einsatzmöglichkeiten von hydraulischen Antriebssystemen.

Da das Abtriebsmoment eines sekundär geregelten Hydraulikmotors abhängig vom Produkt aus seinem Schluckvolumen und dem Versorgungsdruck ist, müssen das maximal mögliche Schluckvolumen des Hydraulikmotors sowie der Versorgungsdruck auf die maximale Belastung des Antriebssystems ausgelegt werden. Während Arbeitsphasen mit geringeren Leistungsanforderungen muss dementsprechend das Schluckvolumen des Hydraulikmotors heruntergeregelt werden.

Verstellbare hydraulische Verdrängermaschinen, insbesondere Axialkolbeneinheiten, weisen jedoch prinzipbedingt in Arbeitspunkten mit kleinen Verstellvolumina und hohen Betriebsdrücken hohe Verluste auf. Ist die Leistungsanforderung an das hydraulische Antriebssystem gering, wie dies z. B. bei gleichmäßiger Fahrt mit geringer Geschwindigkeit und kleiner Zugkraft oder bei dem Stand des Fahrzeugs der Fall ist, arbeiten jedoch bei herkömmlichen sekundär geregelten hydraulischen Antriebssystemen beide Verdrängereinheiten in genau solchen Arbeitspunkten. Sowohl die druckgeregelte Hydraulikpumpe als auch der sekundär z. B. drehzahlgeregelte Hydraulikmotor arbeiten bei diesen geringen Leistungsanforderungen weiterhin bei dem auch für maximale Leistungsanforderungen vorgesehenen Systemdruck und dementsprechend mit kleinen Förder- bzw. Schluckvolumina. Hierdurch ergeben sich sowohl hohe Energieverluste und damit ein geringer Gesamtwirkungsgrad, als auch eine hohe Belastung sämtlicher Komponenten.

Aus der DE-A-41 11 00 ist ein Verfahren zur Leistungsbegrenzung einer hydraulischen Maschine mit verstellbarem Schluck- bzw. Fördervolumen bekannt, die als Sekundäreinheit an ein Drucknetz mit eingeprägtem Druck angeschlossen ist, das von einer Primäreinheit gespeist wird. Aus den Nenngrößen der Primär- und Sekundäreinheit wird ein zulässiger Volumenstrom der Sekundäreinheit berechnet und gleichzeitig wird die Drehzahl der Sekundäreinheit gemessen. Aus dem zulässigen Volumenstrom und der Drehzahl der Sekundäreinheit wird ein zulässiger Schwenkwinkel für die Sekundäreinheit erzeugt, wobei der Schwenkwinkel der Sekundäreinheit auf den erzeugten Wert begrenzt wird.

Aus der EP-A-0 065 304 ist ein elektrohydraulisches Antriebssystem mit einer Hydraulikpumpe bekannt, deren Auslastung über eine Verstelleinrichtung steuerbar ist, welche über eine Steuereinrichtung mit einem Steuerdruck beaufschlagbar ist.

Aus der DE-A-100 33 803 ist ein Flurförderzeug mit einer Arbeitshydraulik und einem hydrostatischen Fahrantrieb bekannt, wobei eine gemeinsame Pumpe für die Arbeitshydraulik und dem hydrostatischen Fahrantrieb vorgesehen ist, wobei die installierte Fördermenge der Pumpe im Wesentlichen auf den Mengenbedarf der Arbeitshydraulik ausgelegt ist und wobei der hydostatische Fahrantrieb eine Sekundärregelung aufweist.

Aufgabe der vorliegenden Erfindung ist es daher, ein sekundär geregeltes hydraulisches Antriebssystem weiterzuentwickeln, um den Gesamtwirkungsgrad zu erhöhen und die Belastung der Komponenten zu verringern. Vorteilhafterweise sollte dies mit einem möglichst einfachen und kostengünstigen System ermöglicht werden.

Erfindungsgemäß wird diese Aufgabe von einem hydraulischen Antriebssystem gemäß Anspruch 1 gelöst. Dieses hydraulische Antriebssystem weist dabei eine druckgeregelte Hydraulikpumpe zur Bereitstellung eines Systemdrucks und einen sekundär geregelten Hydraulikmotor auf, wobei weiterhin eine Steuerung vorgesehen ist, welche den Soll-Systemdruck während des Betriebs in Abhängigkeit von einem Betriebsparameter des Hydraulikmotors einstellt. Die erfindungsgemäße Steuerung reagiert dabei auf die Veränderung des Betriebsparameters des Hydraulikmotors, und damit auf unterschiedliche Anforderungen an das hydraulische Antriebssystem, durch eine Veränderung des Soll-Systemdrucks, welcher der Druckregelung der Hydraulikpumpe vorgegeben wird. Hierdurch lässt sich die bei bekannten sekundär geregelten hydraulischen Antriebssystemen vorhandene Problematik, dass der Soll-Systemdruck sich nach der maximalen Leistungsabgabe des Antriebssystems richten muss und während des Betriebes immer konstant hoch bleibt, ohne dass dies für die aktuelle Leistungsabgabe des Hydraulikmotors nötig wäre, sowie die damit verbundenen oben beschriebenen Nachteile vermeiden.

Erfindungsgemäß stellt die Steuerung dabei den Soll-Systemdruck in Abhängigkeit von den Leistungs- und/oder Momentenanforderungen an den sekundär geregelten Hydraulikmotor ein. Die erfindungsgemäße Steuerung kann hierdurch bei hohen Belastungen des Hydraulikmotors einen hohen Soll-Systemdruck vorgeben, welcher von der druckgeregelten Hydraulikpumpe bereitgestellt wird, um die in diesen Betriebsphasen benötigten großen Abtriebsmomente des Hydraulikmotors bereitzustellen. In Betriebsphasen mit geringen Anforderungen an den Hydraulikmotor kann die Steuerung dagegen einen niedrigeren Soll-Systemdruck vorgeben, welcher dennoch ausreicht, die in diesen Phasen kleineren benötigten Abtriebsmomente zur Verfügung zu stellen. Erfindungsgemäß kann so der Systemdruck an die Leistungsanforderungen des sekundär geregelten Antriebssystems angepaßt werden.

Da in Betriebsphasen mit geringen Leistungsanforderungen das Druckniveau abgesenkt werden kann, arbeiten beide Verdrängereinheiten mit größeren Verstellvolumina und geringeren Betriebsdrücken, so dass die Verluste der Verdrängereinheiten während dieser Phasen vermindert werden können. Ebenso werden alle Komponenten während des Betriebs mit dem niedrigeren Versorgungsdruck geschont, anstatt wie im Stand der Technik auf einem nicht benötigten hohen Druckniveau zu arbeiten. Durch eine Veränderung des Soll-Systemdrucks in Abhängigkeit von einem Betriebsparameter des Hydraulikmotors, z. B. der benötigten Leistungs- und/oder Momentenanforderung an den Hydraulikmotor, kann das erfindungsgemäße hydraulische Antriebssystem in Phasen mit hohen Leistungsanforderungen diese trotzdem problemlos bewältigen. Hierdurch ergibt sich bei gleichen maximalen Abtriebsleistungen bzw. Abtriebsmomenten ein erheblich besserer Gesamtwirkungsgrad über den Arbeitszyklus, wodurch auch ein entsprechend geringerer Kraftstoffverbrauch und eine geringere Umweltbelastung erzielt werden können.

Weiterhin vorteilhafterweise stellt die erfindungsgemäße Steuerung dabei den Soll-Systemdruck auf Grundlage eines Betriebsparameters, welcher von der sekundären Regelung des Hydraulikmotors bereitgestellt wird, und insbesondere auf Grundlage des Verstellwinkels des verstellbaren sekundär geregelten Hydraulikmotors ein. Hierdurch ist keine komplizierte Steuerung nötig, welche die Anforderungen an das Antriebssystem unabhängig von der sekundären Regelung des Hydraulikmotors analysieren müsste, um den Soll-Systemdruck einzustellen. Vielmehr kann direkt auf die ohnehin vorhandene Regelung des Hydraulikmotors zurückgegriffen werden, welche die Leistungs- bzw. Momentenanforderungen an den Hydromotor ohnehin berücksichtigt. Da der Verstellwinkel des Hydraulikmotors der vom Hydraulikmotor zur Verfügung gestellten Abtriebsleistung bzw. dem vom Motor zur Verfügung gestellten Abtriebsmoment entspricht, ergibt sich eine besonders einfache Ansteuerung des Soll-Systemdrucks auf Grundlage des Verstellwinkels des Hydraulikmotors. Dabei kann der über die sekundäre Regelung des Hydraulikmotors vorgegebene Verstellwinkel selbst zur Einstellung des Soll-Systemdrucks herangezogen werden. Hierdurch ergibt sich eine Ausführung der vorliegenden Erfindung mit einem nur geringfügig erhöhten Steuerungsaufwand.

Weiterhin vorteilhafterweise stellt die erfindungsgemäße Steuerung dabei den Soll-Systemdruck auf mindestens zwei unterschiedliche Druckstufen ein. Durch die Verwendung von unterschiedlichen Druckstufen, zwischen welchen die Steuerung wechselt, ergibt sich dabei wiederum eine einfache Ansteuerung des erfindungsgemäßen hydraulischen Antriebssystems.

Vorteilhafterweise wechselt dabei die Steuerung von einer ersten Druckstufe zur einer zweiten Druckstufe, wenn der Betriebsparameter des Hydraulikmotors einen bestimmten Wert erreicht. So kann z. B. von einer Normaldruckstufe in eine Hochdruckstufe gewechselt werden, wenn die Leistungs- und/oder Momentenanforderung an den Hydraulikmotor einen gewissen Wert überschreiten. Durch den damit erhöhten Systemdruck kann das erfindungsgemäße hydraulische Antriebssystem damit auch hohe Leistungsanforderungen bereitstellen. Sinken die Leistungsanforderungen dagegen wieder unter einen gewissen Wert, kann z. B. wieder zum Normaldruck zurückgewechselt werden, wodurch sich ein besserer Wirkungsgrad in Phasen mit geringen Leistungsanforderungen verwirklichen lässt.

Selbstverständlich ist es dabei auch möglich, zur Anpassung an unterschiedliche Leistungsanforderungen mehr als zwei Druckstufen zu verwenden, was jedoch wiederum die Komplexität des Systems für die meisten Anforderungen unnötig verkomplizieren würde.

Vorteilhafterweise wechselt die erfindungsgemäße Steuerung von einer Normaldruckstufe auf eine Hochdruckstufe, wenn der Verstellwinkel des verstellbaren sekundär geregelten Hydraulikmotors einen bestimmten Wert erreicht. Hierdurch wird bei kleinen Leistungsanforderungen an den sekundär geregelten Fahrantrieb der Systemdruck von Seiten der druckgeregelten Hydraulikpumpe auf einem geringen Normaldruckniveau gehalten. Soll jedoch die anzutreibende Maschine stark beschleunigt werden oder muss sie hohe Gegenkräfte (Zugkräfte, Reibungskräfte, ...) überwinden, wird der Hydraulikmotor gemäß der sekundären Regelung sein Schluckvolumen vergrößern, das heißt er wird weiter ausschwenken. Erreicht der Hydraulikmotor dabei einen gewissen Verstellwinkel, z. B. den maximalen Verstellwinkel, gilt dies erfindungsgemäß für die Steuerung als Indikator dafür, dass das von der druckgeregelten Verstellpumpe bereitgestellte Versorgungsdruckniveau nicht ausreicht, um den Leistungsanforderungen des Abtriebes gerecht zu werden. In diesem Betriebspunkt schaltet deshalb die erfindungsgemäße Steuerung den Soll-Systemdruck, welcher der druckgeregelten Hydraulikpumpe vorgegeben wird, von dem niedrigen Normaldruck auf ein höheres Druckniveau, so dass das erfindungsgemäße hydraulische Antriebssystem auch den hohen Leistungsanforderungen gerecht wird.

Weiterhin vorteilhafterweise wechselt dabei die Steuerung von einer Hochdruckstufe auf eine Normaldruckstufe, wenn der Verstellwinkel des verstellbaren sekundär geregelten Hydraulikmotors einen bestimmten Wert, insbesondere den maximalen Verstellwinkel in einer Verstellrichtung, unterschreitet. Unterschreitet also der Hydromotor in Folge entweder des erhöhten Versorgungsdruckes oder eines verringerten geforderten Abtriebsmomentes sein Schluckvolumen einen bestimmten Wert, insbesondere den maximalen Verstellwinkel, senkt die erfindungsgemäße Steuerung die Soll-Druckvorgabe der Druckregelung der Hydraulikpumpe wieder auf das geringere Versorgungsdruckniveau. Selbstverständlich ist es dabei auch möglich, dass der Verstellwinkel, bei welchem von der Hochdruckstufe auf die Normaldruckstufe gewechselt wird, etwas kleiner ist als der Verstellwinkel, bei welchem von der Normaldruckstufe in die Hochdruckstufe gewechselt wird, so dass sich eine gewisse Hysterese der Schaltung ergibt, welche ein unnötiges Umschalten zwischen den Druckstufen vermeidet, wenn die Leistungsanforderungen an den Hydraulikmotor nur geringfügig unter- bzw. oberhalb der maximal mit Normaldruck möglichen Abtriebsleistung liegen.

Weiterhin vorteilhafterweise ist erfindungsgemäß mindestens ein Signalgeber vorgesehen, welcher der Steuerung ein Indikatorsignal gibt, wenn der Verstellwinkel des verstellbaren sekundär geregelten Hydraulikmotors einen bestimmten Wert erreicht, insbesondere den maximalen Verstellwinkel in einer Verstellrichtung. Ein solcher Signalgeber ermöglicht dabei eine besonders einfache und zuverlässige Ansteuerung, um von einer Druckstufe in eine andere Druckstufe zu wechseln.

Weiterhin vorteilhafterweise sind erfindungsgemäß mindestens zwei Signalgeber vorgesehen, insbesondere für den maximalen Verstellwinkel in beide Verstellrichtungen. So kann mit nur zwei Signalgebern eine Umschaltung der Druckniveaus bei maximalen Leistungsanforderungen bezüglich der Beschleunigung bzw. bezüglich der Bremsmomente verwirklicht werden.

Weiterhin vorteilhafterweise ist erfindungsgemäß mindestens ein Hochdruckspeicher vorgesehen, welcher mit dem Hydraulikkreislauf aus Hydraulikpumpe und Hydraulikmotor verbunden oder verbindbar ist. Dieser Hochdruckspeicher kann dabei Hydraulikflüssigkeit aufnehmen, wenn der Hydraulikmotor z. B. als Pumpe arbeitet, und die so gespeicherte Energie in Phasen, in welchen der Hydraulikmotor wieder Leistung aufnimmt, an das Hydrauliksystem zurückgeben.

Weiterhin vorteilhafterweise sind erfindungsgemäß mindestens zwei Hochdruckspeicher vorgesehen, welche durch die Steuerung abwechselnd mit dem Hydraulikkreislauf verbindbar sind. Hierdurch ist es möglich, auf die unterschiedlichen SollDruckniveaus des erfindungsgemäßen Hydrauliksystems zu reagieren, wobei zur Erhöhung des Systemdrucks nicht auch der Druck in den Hydraulikspeichern entsprechend erhöht werden muss.

Vorteilhafterweise weisen die Hochdruckspeicher hierzu unterschiedliche Druckniveaus auf, und werden von der Steuerung in Abhängigkeit von dem eingestellten Soll-Systemdruck mit dem Hydraulikkreislauf verbunden. Hierdurch kann der Ist-Systemdruck schnell an den Soll-Systemdruck angenähert werden, in dem der entsprechende Hochdruckspeicher mit dem Hydraulikkreislauf verbunden wird.

Weiterhin vorteilhafterweise ist erfindungsgemäß die Steuerung aus einfachen Schaltelementen aufgebaut. Durch diese kann problemlos zwischen einzelnen Druckstufen hin und her geschaltet werden, ohne dass hierfür komplexe Regelungen notwendig wären.

Vorteilhafterweise wird das erfindungsgemäße hydraulische Antriebssystem dabei als hydrostatisches Getriebe zum Antrieb eines Fahrzeugs, insbesondere zum Antrieb einer verfahrbaren Arbeitsmaschine, weiterhin vorteilhafterweise zum Antrieb einer Erdbewegungsmaschine eingesetzt. Bei einem solchen Fahrantrieb ergeben sich in besonderer Weise die erfindungsgemäßen Vorteile, da hier entsprechende Arbeitszyklen mit sehr unterschiedlichen Anforderungen an den Fahrantrieb vorliegen.

Dementsprechend umfasst die vorliegende Erfindung weiterhin ein Fahrzeug, insbesondere eine verfahrbare Arbeitsmaschine, insbesondere eine Erdbewegungsmaschine, mit einem hydraulischen Antriebssystem, wie es oben beschrieben wurde. Ein solches Fahrzeug hat offensichtlich die gleichen Vorteile, wie sie weiter oben beschrieben wurden, insbesondere den geringeren Kraftstoffverbrauch und die geringere Umweltbelastung bei gleichbleibend hoher Leistung.

Die vorliegende Erfindung wird nun anhand von Zeichnungen und Ausführungsbeispielen näher erläutert. Dabei zeigen:
- Figur 1:: ein erstes Ausführungsbeispiel des erfindungsgemäßen hydraulischen Antriebssystems und
- Figur 2:: ein zweites Ausführungsbeispiel des erfindungsgemäßen hydraulischen Antriebssystems.

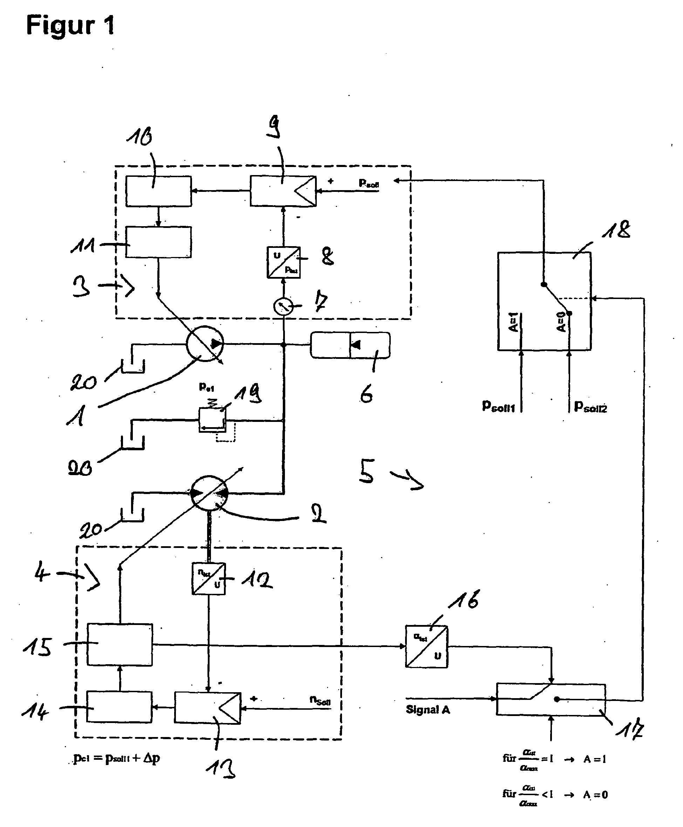

Figur 1 zeigt das Schaltbild eines ersten Ausführungsbeispiels des erfindungsgemäßen sekundär geregelten hydraulischen Antriebssystems. Der offene Hydraulikkreislauf wird dabei von der hydraulischen Verstellpumpe 1 sowie dem hydraulischen Verstellmotor 2 gebildet, wobei die Hydraulikpumpe 1 Hydraulikfluid aus dem Hydraulikreservoir 20 zum Hydraulikmotor 2 pumpt, über welchen es wieder zurück zum Hydraulikreservoir 20 strömt. Die Hydraulikpumpe 1 ist dabei über eine Regelung 3 druckgeregelt, während der Hydraulikmotor 2 über eine Regelung 4 sekundär geregelt ist, das heißt er wird in Abhängigkeit von seiner Drehzahl, seinem Drehmoment und/oder seinem Drehwinkel geregelt.

Die Hydraulikpumpe 1 ist eine Verstellpumpe mit einer Förderrichtung, welche von 0 auf ein maximales Fördervolumen verstellt werden kann. Die Druckregelung 3 sorgt dabei dafür, dass die Hydraulikpumpe 1 in das Leitungsnetz exakt den Ölvolumenstrom aus dem Reservoir pumpt, welcher den Systemdruck pᵢₛₜ im Leitungsnetz konstant auf dem vorgegebenen Soll-Systemdruck pₛₒₗₗ hält. Hierzu ist ein Drucksensor 7 mit dem Ausgang der Hydraulikpumpe 1 verbunden, welche über einen Wandler 8 den Systemdruck pᵢₛₜ an den Regler 9 weitergibt. Der Regler 9 erhält als weiteres Eingangssignal den Soll-Systemdruck pₛₒₗₗ. In Abhängigkeit von der Differenz zwischen dem Ist-Systemdruck pᵢₛₜ und dem Soll-Systemdruck pₛₒₗₗ steuert der Regler 9 das Proportionalventil 10 an, über welches der Stellzylinder 11 das Fördervolumen der Hydraulikpumpe 1 verstellt. Über diesen Regelkreislauf aus Drucksensor, Regler und Stellglied für die Hydraulikpumpe 1 wird der Ist-Systemdruck pᵢₛₜ im Leitungsnetz auf den Soll-Systemdruck pₛₒₗₗ eingeregelt.

Der Hydromotor 12 ist ein Verstellmotor, welcher von einem maximal negativem Schluckvolumen auf ein maximales positives Schluckvolumen verstellt werden kann, das heißt der Hydraulikmotor kann komplett Durchschwenken. Hierdurch kann über den Hydraulikmotor 2 entweder Hydraulikfluid aus dem Leitungsnetz ins Reservoir 20 fließen, wobei der Hydraulikmotor 2 ein Abtriebsmoment an die anzutreibende Vorrichtung abgibt. Umgekehrt kann der Hydraulikmotor 2 auch als Hydraulikpumpe arbeiten und Hydraulikfluid aus dem Hydraulikreservoir 20 ins Leitungsnetz fördern, und so die Vorrichtung abbremsen. Dabei ist mit dem Leitungsnetz des Hydraulikkreislaufes ein Hochdruckspeicher 6 verbunden, welcher die hydraulische Energie temporär speichern kann. Steigt der Systemdruck, beispielsweise, in dem der Hydraulikmotor im Pumpenbetrieb arbeitet, so nimmt der Hochdruckspeicher 6 Ölvolumen auf und kann es zu einem späteren Zeitpunkt in das Leitungsnetz zurückgeben.

Das Abtriebsmoment des Hydraulikmotors 2, welcher vorteilhafterweise in Axialkolbenbauweise ausgeführt ist, steht dabei in proportionalem Zusammenhang zu seinem eingestellten Schluckvolumen und dem anliegenden Ist-Systemdruck pᵢₛₜ. Die sekundäre Regelung 4 des Hydraulikmotors 2 ist in dem dargestellten Ausführungsbeispiel dabei als Drehzahlregelung ausgelegt. Diese regelt das Schluckvolumen des Hydraulikmotors 2 exakt so, dass sein Abtriebsmoment den Antriebsstrang der anzutreibenden Vorrichtung auf die vom Bediener gewünschte Drehzahl beschleunigt, verzögert oder auf der gewünschten Drehzahl hält. Je nach eingestelltem Schluckvolumen entnimmt der Hydromotor hierfür dem Leitungsnetz den erforderlichen Volumenstrom. Erfordert die Drehzahlvorgabe des Bedieners eine Verzögerung des Antriebsstranges, so wechselt der Verstellmotor seine Schluckrichtung und arbeitet im Pumpbetrieb. Die Regelung 4 umfasst hierzu zunächst einen Drehzahlsensor 12, welcher über einen Wandler die Ist-Drehzahl des Hydraulikmotors 2 an den Regler 13 weitergibt. Der Regler 13 erhält weiterhin eine Soll-Drehzahlvorgabe nₛₒₗₗ, welche der vom Bediener gewünschten Abtriebsdrehzahl des Antriebsstranges entspricht. Gemäß der Differenz zwischen der Ist-Drehzahl nᵢₛₜ und der Soll-Drehzahl nₛₒₗₗ steuert der Regler 13 daraufhin das Proportionalventil 14 an, welches über den Stellzylinder 15 das Schluckvolumen des Hydraulikmotors 2 entsprechend verstellt.

Um ein breites Leistungsspektrum des erfindungsgemäßen sekundär geregelten hydraulischen Antriebssystems bei einem hohen Gesamtwirkungsgrad zu erreichen, ist nun erfindungsgemäß eine Steuerung 5 vorgesehen, welche den Soll-Systemdruck pₛₒₗₗ während des Betriebs des hydraulischen Antriebssystems in Abhängigkeit von einem Betriebsparameter des Hydraulikmotors 2 einstellt. Um die Leistungs- und/oder Momentenanforderung an den Hydraulikmotor 2 auf einfache Art und Weise berücksichtigen zu können, wird hierbei zur Vorgabe des Soll-Systemdrucks pₛₒₗₗ der Verstellwinkel αᵢₛₜ des Hydraulikmotors 2 herangezogen. Dieser Verstellwinkel αᵢₛₜ des Hydraulikmotors 2 kann dabei problemlos über den Stellzylinderweg des Stellzylinders 15, welcher das Schluckvolumen des Hydraulikmotors 2 einstellt, bestimmt werden.

Für die erfindungsgemäße Steuerung 5, bei welcher zwischen einer Normaldruckstufe mit einem Soll-Druck pₛₒₗₗ₂ auf eine Hochdruckstufe mit einem Soll-Druck pₛₒₗₗ₁ gewechselt wird, wenn der Verstellwinkel αᵢₛₜ des Hydraulikmotors 2 den maximalen Verstellwinkel αₘₐₓ in einer der beiden Förderrichtungen erreicht hat, sind dabei zwei Signalgeber 16 ausreichend, welche der Steuerung ein Indikatorsignal geben, wenn der Ist-Verstellwinkel αᵢₛₜ des Hydraulikmotors 2 den maximalen Verstellwinkel αₘₐₓ in einer der beiden Verstellrichtungen erreicht hat, das heißt wenn der Verstellmotor entweder mit maximalem negativen Schluckvolumen oder mit maximalem positiven Schluckvolumen arbeitet. Diese Indikatorsignale erzeugen dabei in dem Schaltelement 17 ein Umschaltsignal, welches an das Druckumschaltelement 18 weitergeleitet wird. Ist also der Ist-Verstellwinkel αᵢₛₜ des Hydraulikmotors 2 kleiner als der maximale Verstellwinkel αₘₐₓ, liegt das Umschaltsignal A nicht an dem Druckumschaltelement 18 an, das heißt A = 0. Erhält das Schaltelement 17 dagegen ein Indikatorsignal von den Signalgebern 16, das der Ist-Verstellwinkel αᵢₛₜ des Hydraulikmotors 2 gleich dem maximalen Verstellwinkel αₘₐₓ ist, so liegt ein Umschaltsignal A an dem Druckumschaltelement 18 an, das heißt A = 1.

Je nach dem, ob an dem Druckumschaltelement 18 ein Umschaltsignal anliegt oder nicht, das heißt ob A = 1 oder A = 0, gibt das Druckumschaltelement 18 dem Regler 9 der Druckregelung 3 der Hydraulikpumpe 1 einen Soll-Systemdruck pₛₒₗₗ₁ oder pₛₒₗₗ₂ vor. Hierdurch wird dem Regler 9 ein hoher Soll-Systemdruck pₛₒₗₗ₁ vorgegeben, wenn das Umschaltsignal A = 1 ist, das heißt wenn der Ist-Verstellwinkel des Hydraulikmotors 2 dem maximalen Verstellwinkel αₘₐₓ entspricht. Liegt dagegen kein Umschaltsignal am Druckumschaltelement 18 an, da der Ist-Verstellwinkel αᵢₛₜ kleiner ist als der maximale Verstellwinkel αₘₐₓ, so gibt die Steuerung 5 dem Regler 9 der Druckregelung 3 ein Soll-Systemdruck pₛₒₗₗ₂ vor, welcher einem Normal-Systemdruck bei geringen Leistungsanforderungen entspricht und niedriger ist als der Soll-Systemdruck pₛₒₗₗ₁.

Weiterhin ist mit dem Hydraulikkreislauf ein Druckregelventil 19 verbunden, welches unterhalb eines Druckes pₑ₁ = pₛₒₗₗ₁ + δp sperrt und oberhalb dieses Druckes das Leitungsnetz mit dem Hydraulikreservoir 20 verbindet. Hierdurch ist sichergestellt, dass der maximale Systemdruck den höheren Soll-Systemdruck pₛₒₗₗ₁ maximal um δp überschreiten kann.

Das sekundär geregelte hydraulische Antriebssystem kann nun z. B. als Fahrantrieb eines Fahrzeugs, wie z. B. einer Erdbewegungsmaschine eingesetzt werden. Der erfindungsgemäße hydrostatische Fahrantrieb kann so ein breites Leistungsspektrum abdecken, das heißt er kann sowohl kleinen Leistungsanforderungen (kleinen Geschwindigkeiten und Beschleunigungen bei kleinen Antriebsmomenten) und großen Leistungsanforderungen (große Geschwindigkeiten und Beschleunigungen bei großen Antriebsmomenten) gerecht werden, wobei sich durch die erfindungsgemäße Umschaltung des Soll-Systemdrucks ein guter Wirkungsgrad sowohl bei kleinen als auch bei großen Leistungsanforderungen ergibt. Für einen typischen Fahrzyklus benötigt der Fahrantrieb dabei während der Anfahrphase ein großes Abtriebsmoment, um die Maschine auf die gewünschte Geschwindigkeit zu beschleunigen. Während der Fahrt mit der erreichten Geschwindigkeit benötigt der Fahrantrieb dagegen nur noch ein kleines Abtriebsmoment, um die Maschine auf Geschwindigkeit zu halten.

Da das Abtriebsmoment des sekundär geregelten Hydraulikmotors 2 abhängig vom Produkt aus seinem Schluckvolumen und dem Systemdruck pᵢₛₜ ist, benötigt der sekundär geregelte Antrieb während hoher Belastungen, z. b. während einer Anfahrphase, einen hohen Systemdruck pᵢₛₜ, während er bei geringen Leistungsanforderungen wie z. B. während einer Fahrt mit konstanter Geschwindigkeit nur noch einen geringen Systemdruck pᵢₛₜ benötigt. Die erfindungsgemäße Versorgungsdruckumschaltung realisiert diese Anpassung des Systemdrucks pᵢₛₜ an die Leistungsanforderung des sekundär geregelten Antriebs dabei durch das Umschalten von einem niedrigerem Soll-Systemdruck pₛₒₗₗ₂ auf einen höheren Soll-Systemdruck pₛₒₗₗ₁, wenn der Verstellwinkel des Hydraulikmotors 2 einen gewissen Wert, in diesem Fall den maximalen Verstellwinkel αₘₐₓ erreicht.

Werden nur kleine Leistungsanforderungen an den sekundär geregten Antrieb gestellt, so wird der Systemdruck pᵢₛₜ durch die druckgeregelte Hydraulikpumpe 1 auf dem niedrigen Normal-Systemdruck pₛₒₗₗ₁ gehalten, welcher der Druckregelung 3 als Soll-Systemdruck pₛₒₗₗ vorgegeben wird. Da die Leistungsanforderungen an den Hydraulikmotor in diesen Phasen gering sind, arbeitet der Motor mit Verstellwinkeln αᵢₛₜ, welche kleiner sind als der maximale Verstellwinkel αₘₐₓ. Soll jedoch die anzutreibende Maschine stark beschleunigt werden oder muss sie hohe Gegenkräfte wie z. B. Zugkräfte oder Reibungskräfte überwinden, wird der Hydraulikmotor gemäß der Drehzahlregelung 4 sein Schluckvolumen vergrößern, das heißt er wird den Verstellwinkel αᵢₛₜ vergrößern. Erreicht der Hydraulikmotor 2 sein maximales Schluckvolumen und damit seinen maximalen Verstellwinkel αₘₐₓ, gilt dies als Indikator dafür, dass das von der druckgeregelten Hydraulikpumpe 1 bereitgestellte Systemdruckniveau nicht ausreicht, um den Leistungsanforderungen des Abtriebs gerecht zu werden. In diesem Betriebspunkt bei voll ausgeschwenktem Hydraulikmotor 2 wird die Steuerung 5 den Soll-Systemdruck pₛₒₗₗ, welcher der Druckregelung 3 vorgegeben wird, von dem niedrigeren Soll-Systemdruck pₛₒₗₗ₂ auf den höheren Soll-Systemdruck pₛₒₗₗ₁ umschalten. Sobald der Hydraulikmotor 2 in Folge des erhöhten Systemdruckes oder eines geringeren geforderten Abtriebsmomentes sein Schluckvolumen wieder verringert, das heißt zurückschwenkt und damit einen geringeren Verstellwinkel αᵢₛₜ aufweist, senkt die Steuerung 5 die Soll-Druckvorgabe für die Druckregelung 3 der Hydraulikpumpe 1 wieder auf das geringere Versorgungsdruckniveau pₛₒₗₗ₂. Dabei kann bei der Steuerung 5 auch eine gewisse Hysterese vorgesehen sein, so dass nicht sofort wieder von der höheren auf die niedrigere Soll-Druckvorgabe umgeschaltet wird, wenn die Hydraulikpumpe 2 vom maximalen Verstellwinkel αₘₐₓ zurückschwenkt, sondern erst bei Unterschreiten eines kleineren Winkels αₘₐₓ - δ.

Im in Figur 1 gezeigten ersten Ausführungsbeispiel ist ein Hochdruckspeicher 6 mit dem Hydraulikkreislauf aus Hydraulikpumpe 1 und Hydraulikmotor 2 verbunden, welcher während Betriebsphasen mit geringen Leistungsanforderungen und damit einem niedrigen Systemdruck pᵢₛₜ = pₛₒₗₗ₂ auf diesem niedrigeren Systemdruck liegt. Schaltet nun die Steuerung 5 auf einen höheren Soll-Systemdruck pₛₒₗₗ₁, so muss auch der Hochdruckspeicher 6 von der Hydraulikpumpe 1 auf das höhere Druckniveau gebracht werden, um das Leitungsnetz auf den höheren Systemdruck pᵢₛₜ = pₛₒₗₗ₁ zu bringen. Hierfür muss zunächst auch Hydraulikfluid in den Hydraulikspeicher 6 gepumpt werden, so dass sich eine gewisse Verzögerung bei der Bereitstellung des höheren Systemdrucks ergibt.

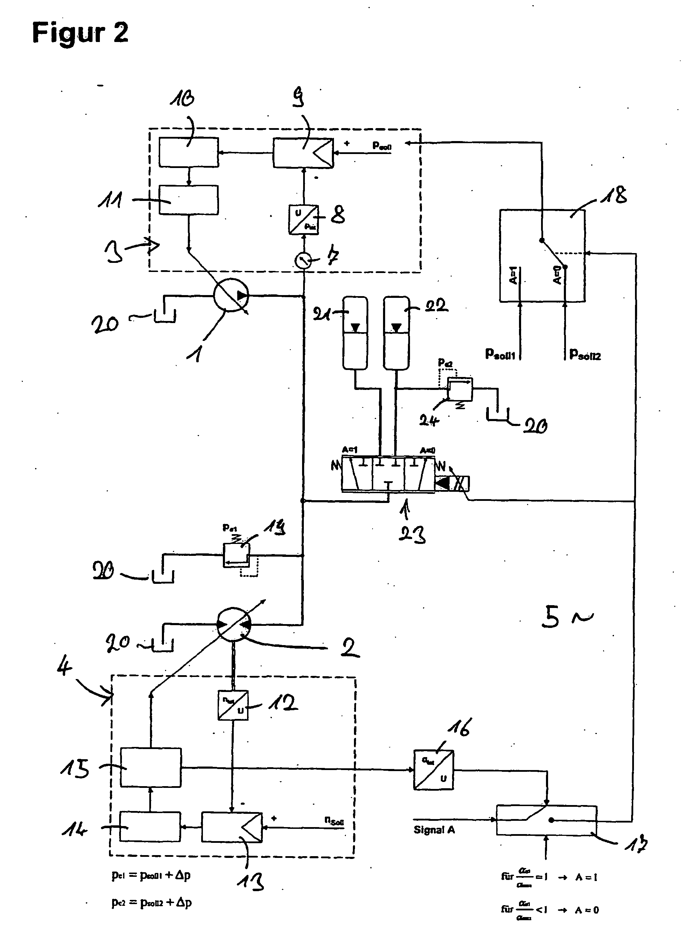

In Figur 2 ist nun ein zweites Ausführungsbeispiel des erfindungsgemäßen hydraulischen Antriebssystems dargestellt, welches sich lediglich bezüglich der Hochdruckspeicher von dem in Figur 1 dargestellten Antriebssystem unterscheidet. Bezüglich aller anderen Komponenten wird daher auf die Beschreibung bezüglich Figur 1 Bezug genommen.

Im in Figur 2 gezeigten Ausführungsbeispiel sind nun zwei Hochdruckspeicher 21 und 22 vorgesehen, welche über das Schaltventil 23 abwechselnd mit dem Hydraulikkreislauf aus Hydraulikpumpe 1 und Hydraulikmotor 2 verbunden werden können. Das Schaltventil 23 wird dabei ebenfalls von der Steuerung 5 angesteuert, in dem das Umschaltsignal A an das Schaltventil 23 anliegt und dieses ansteuert. Für A = 0, das heißt wenn kein Umschaltsignal anliegt, da der Verstellwinkel αᵢₛₜ kleiner ist als der maximale Verstellwinkel αₘₐₓ, verbindet das Umschaltventil 23 dabei den Hydraulikkreislauf mit dem Hochdruckspeicher 22, welcher dementsprechend den niedrigeren Normaldruck pₛₒₗₗ₂ aufweist. Dabei ist ein Druckregelventil 24 mit der Hydraulikleitung zwischen Hochdruckspeicher 22 und Umschaltventil 23 verbunden, welches bis zu einem Druck pₑ₂ = pₛₒₗₗ₂ + δp sperrt und oberhalb dieses Druckes den Hochdruckspeicher 22 mit dem Hydraulikreservoir 20 verbindet. Hierdurch ist sichergestellt, dass der Druck im Hochdruckspeicher 22 den niedrigeren Normal-Systemdruck pₛₒₗₗ₂ maximal um δp überschreitet. Ist der Hochdruckspeicher 22 mit dem Leitungsnetz verbunden, gilt das Gleiche damit auch für das Leitungsnetz selbst.

Wird ein Umschaltsignal A = 1 erzeugt, weil der Verstellwinkel des Hydraulikmotors 2 den maximalen Verstellwinkel αₘₐₓ erreicht, schaltet das Umschaltventil 23 um, so dass der Hochdruckspeicher 22 vom Leitungsnetz getrennt ist und der Hochdruckspeicher 21 mit dem Leitungsnetz verbunden wird. Gleichzeitig wird die Soll-Druckvorgabe auf den höheren Soll-Systemdruck pₛₒₗₗ₁ umgeschaltet. Der Hochdruckspeicher 21 weist dabei aus vorherigen Umschaltzyklen bereits den höheren Systemdruck pₛₒₗₗ₁ auf, so dass der Druckanstieg im Leitungsnetz erheblich schneller erfolgt.

Schwenkt der Hydraulikmotor 2 wieder zurück, so dass der Soll-Systemdruck wieder auf den niedrigeren Druck pₛₒₗₗ₂ eingestellt wird, schaltet auch das Umschaltventil 23 wieder zurück und verbindet den Hochdruckspeicher 22 mit dem niedrigeren Druckniveau mit dem Leitungsnetz. Durch die beiden Hochdruckspeicher 21 und 22 auf unterschiedlichen Druckniveaus pₛₒₗₗ₁ und pₛₒₗₗ₂ ergibt sich somit ein sehr schnelles Umschalten im Leitungsnetz zwischen den Druckniveaus, ohne dass hierfür der Hochdruckspeicher jeweils gefüllt oder entleert werden müßte. Hierdurch ergibt sich wiederum ein schnelleres Ansprechen der erfindungsgemäßen Steuerung sowie ein höherer Wirkungsgrad.

Durch die erfindungsgemäße Absenkung des Druckniveaus bei geringerer Leistungsanforderung ergibt sich erfindungsgemäß eine Verminderung der Verluste der Verdrängereinheiten, da diese prinzipbedingt (insbesondere wenn es sich um Axialkolbeneinheiten handelt) in Arbeitspunkten mit kleinen Schluckvolumina und hohen Betriebsdrücken hohe Verluste aufweisen würden. Durch den geringeren Systemdruck bei kleinen Leistungsanforderungen arbeiten die Verdrängereinheiten dagegen in diesem Bereich bei geringeren Drücken und entsprechend höheren Schluckvolumina, und damit höheren Verstellwinkeln, so dass sich ein erheblich verbesserter Gesamtwirkungsgrad ergibt. Hierdurch ergibt sich ein geringerer Kraftstoffverbrauch und eine geringere Umweltbelastung.

Erfindungsgemäß ist es dabei zudem möglich, durch eine Vorauswahl des Bedieners den Antrieb an gewisse Leistungsanforderungen anzupassen, z. B. indem Auswahlstufen für Eco, Power, Comfort oder ähnliches vorgegeben werden. Durch diese Vorauswahl des Bedieners kann dabei die Steuerung 5, welche die Soll-Drücke vorgibt, entsprechend in ihren Schaltcharakteristiken verändert werden. So ist denkbar, für den Power-Mode ständig den maximalen Soll-Systemdruck vorzugeben, und die erfindungsgemäße Druckumschaltung nur in einem Comfort- oder Eco-Mode vorzusehen. Ebenso ist es denkbar, je nach Betriebsmodus unterschiedliche Verstellwinkel αₘₐₓ₁, ₂, ... vorzusehen, an welchen von einem niedrigen Niveau auf ein hohes Druckniveau umgeschaltet wird. Weiterhin ist es denkbar, je nach Betriebsmodus unterschiedliche Solldruckniveaus p_{soll1,2, Power}, p_{soll1,2 eco}, etc. vorzusehen, welche je nach Betriebsmodus der Druckregelung vorgegeben werden.

Erfindungsgemäß ergibt sich neben der Erhöhung des Gesamtwirkungsgrades auch eine reduzierte Belastung der Komponenten während des Betriebs auf niedrigem Versorgungsdruck, ohne dass hierdurch Leistungseinbußen entstehen, da durch die Umschaltung auf den hohen Versorgungsdruck der Antrieb trotzdem hohe Leistungsanforderungen bewältigen kann. Die erfindungsgemäße Ausführung als Umschaltung erfordert dabei zudem mit einen kaum erhöhten Aufwand, da die Mehrzahl aller Elemente ohnehin vorhanden ist.

Es muss hier erfindungsgemäß lediglich die Steuerung 5 hinzukommen, welche mit Hilfe von einfachen Signalgebern und Schaltelementen verwirklicht werden kann. Insbesondere muss für die Steuerung 5 nicht extra eine komplizierte Regelung vorgesehen werden, da diese auf einen Betriebsparameter des Hydraulikmotors zurückgreifen kann, welcher bereits von der sekundären Regelung 4 des Hydraulikmotors 2 bereitgestellt wird.

Erfindungsgemäß ergibt sich damit eine ebenso kostengünstige wie komfortable Lösung, welche den Gesamtwirkungsgrad des Hydrauliksystems erheblich verbessert.

## Patentansprüche

1. Hydraulisches Antriebssystem mit einer druckgeregelten Hydraulikpumpe zur Bereitstellung eines Systemdruckes und einem sekundär geregelten Hydraulikmotor,
**dadurch gekennzeichnet,**
**dass** eine Steuerung (5) vorgesehen ist, welche den Soll-Systemdruck (pₛₒₗₗ) während des Betriebs in Abhängigkeit von einem Betriebsparameter des Hydraulikmotors (2) dadurch einstellt, dass über Indikatorsignale eines Signalgebers (16), die den Betriebsparameter des Hydraulikmotors (2) angeben, in einem Schaltelement (17) ein Umschaltsignal erzeugt wird, welches an ein Druckumschaltelement (18) zur Einstellung des Soll-Systemdruck (pₛₒₗₗ) weitergeleitet wird.

2. Hydraulisches Antriebssystem nach Anspruch 1, wobei die Steuerung den Soll-Systemdruck in Abhängigkeit von den Leistungs- und/oder Momentenanforderungen an den sekundär geregelten Hydraulikmotor einstellt.

3. Hydraulisches Antriebssystem nach Anspruch 1 oder 2, wobei die Steuerung den Soll-Systemdruck auf Grundlage eines Betriebsparameters, welcher von der sekundären Regelung des Hydraulikmotors bereitgestellt wird, und auf Grundlage des Verstellwinkels des verstellbaren sekundär geregelten Hydraulikmotors einstellt.

4. Hydraulisches Antriebssystem nach einem der vorangegangenen Ansprüche, wobei die Steuerung den Soll-Systemdruck auf mindestens zwei unterschiedliche Druckstufen einstellt.

5. Hydraulisches Antriebssystem nach Anspruch 4, wobei die Steuerung von einer ersten Druckstufe zur einer zweiten Druckstufe wechselt, wenn der Betriebsparameter einen bestimmten Wert erreicht.

6. Hydraulisches Antriebssystem nach Anspruch 4 oder 5, wobei die Steuerung von einer Normaldruckstufe auf eine Hochdruckstufe wechselt, wenn der Verstellwinkel des verstellbaren sekundär geregelten Hydraulikmotors einen bestimmten Wert, insbesondere den maximalen Verstellwinkel in einer Verstellrichtung, erreicht.

7. Hydraulisches Antriebssystem nach einem der Ansprüche 4 bis 6, wobei die Steuerung von einer Hochdruckstufe auf eine Normaldruckstufe wechselt, wenn der Verstellwinkel des verstellbaren sekundär geregelten Hydraulikmotors einen bestimmten Wert, unterschreitet.

8. Hydraulisches Antriebssystem nach einem der vorangegangenen Ansprüche, wobei mindestens ein Signalgeber vorgesehen ist, welcher der Steuerung ein Indikatorsignal gibt, wenn der Verstellwinkel des verstellbaren sekundär geregelten Hydraulikmotors einen bestimmten Wert erreicht, insbesondere den maximalen Verstellwinkel in einer Verstellrichtung.

9. Hydraulisches Antriebssystem nach Anspruch 8, wobei mindestens zwei Signalgeber vorgesehen sind, insbesondere für den maximalen Verstellwinkel in beide Verstellrichtungen.

10. Hydraulisches Antriebssystem nach einem der vorangegangenen Ansprüche mit mindestens einem Hochdruckspeicher, welcher mit dem Hydraulikkreislauf aus Hydraulikpumpe und dem Hydraulikmotor verbunden oder verbindbar ist.

11. Hydraulisches Antriebssystem nach Anspruch 10, mit mindestens zwei Hochdruckspeichern, welche durch die Steuerung abwechselnd mit dem Hydraulikkreislauf verbindbar sind.

12. Hydraulisches Antriebssystem nach Anspruch 11, wobei die Hochdruckspeicher unterschiedliche Druckniveaus aufweisen und von der Steuerung in Abhängigkeit von dem eingestellten Soll-Systemdruck mit dem Hydraulikkreislauf verbunden werden.

13. Hydraulisches Antriebssystem nach einem der vorangegangenen Ansprüche, wobei die Steuerung aus einfachen Schaltelementen aufgebaut ist.

14. Hydraulisches Antriebssystem nach einem der vorangegangenen Ansprüche als hydrostatisches Getriebe zum Antrieb eines Fahrzeugs, insbesondere einer verfahrbaren Arbeitsmaschine.

15. Fahrzeug, insbesondere verfahrbare Arbeitsmaschine, mit einem hydraulischen Antriebssystem nach einem der vorangegangenen Ansprüche.

## Claims

1. A hydraulic drive system having a pressure-regulated hydraulic pump for the provision of a system pressure and having a secondarily regulated hydraulic motor,
**characterized in that**
a control (5) is provided which sets the desired system pressure (p_{des}) during operation in dependence on an operating parameter of the hydraulic motor (2) **in that** a switch-over signal is generated in a switching element (17) by means of indicator signals of a transducer (16) which indicate the operating parameter of the hydraulic motor (2) and is forwarded to a pressure switching element (18) for setting the desired system pressure (p_{Des}).

2. A hydraulic drive system in accordance with claim 1, wherein the control sets the desired system pressure in dependence on the performance demands and/or torque demands on the secondarily regulated hydraulic motor.

3. A hydraulic drive system in accordance with either of claims 1 or 2, wherein the control sets the desired system pressure based on an operating parameter which is provided by the secondary regulation of the hydraulic motor, and in particular based on the adjustment angle of the adjustable secondarily regulated hydraulic motor.

4. A hydraulic drive system in accordance with one of the preceding claims, wherein the control sets the desired system pressure to at least two different pressure stages.

5. A hydraulic drive system in accordance with claim 4, wherein the control changes from a first pressure stage to a second pressure stage when the operating parameter reaches a specific value.

6. A hydraulic drive system in accordance with either of claims 4 or 5, wherein the control changes from a normal pressure stage to a high pressure stage when the adjustment angle of the adjustable secondarily regulated hydraulic motor reaches a specific value, in particular the maximum adjustment angle in a displacement direction.

7. A hydraulic drive system in accordance with one of the claims 4 to 6, wherein the control changes from a high pressure stage to a normal pressure stage when the adjustment angle of the adjustable secondarily regulated hydraulic motor falls below a specific value

8. A hydraulic drive system in accordance with one of the preceding claims, wherein at least one transducer is provided which gives the control an indicator signal when the adjustment angle of the adjustable secondarily regulated hydraulic motor reaches a specific value, in particular the maximum adjustment angle in a displacement direction.

9. A hydraulic drive system in accordance with claim 8, wherein at least two transducers are provided in particular for the maximum adjustment angle in both displacement directions.

10. A hydraulic drive system in accordance with one of the preceding claims having at least one high pressure store which is connected or connectable to the hydraulic circuit of the hydraulic pump and the hydraulic motor.

11. A hydraulic drive system in accordance with claim 10 having at least two high pressure stores which are alternately connectable to the hydraulic circuit by the control.

12. A hydraulic drive system in accordance with claim 11, wherein the high pressure stores have different pressure levels and are connected to the hydraulic circuit by the control in dependence on the set desired system pressure.

13. A hydraulic drive system in accordance with one of the preceding claims wherein the control is made up of simple switching elements.

14. A hydraulic drive system in accordance with one of the preceding claims as a hydrostatic transmission for the drive of a vehicle, in particular of a movable work machine.

15. A vehicle, in particular a movable work machine, having a hydraulic drive system in accordance with one of the preceding claims.

## Revendications

1. Système d'entraînement hydraulique comprenant une pompe hydraulique à régulation de pression destinée à fournir une pression de système et un moteur hydraulique à régulation secondaire,
**caractérisé**
**en ce qu'**il est prévu une commande (5) qui définit la pression de consigne du système (pₛₒₗₗ) pendant le fonctionnement en fonction d'un paramètre de fonctionnement du moteur hydraulique (2) en ce qu'au moyen de signaux d'indicateur d'un générateur de signaux (16) qui indiquent le paramètre de fonctionnement du moteur hydraulique (2), un signal de commutation est produit dans un élément de commutation (17), lequel signal est transmis à un élément de commutation de pression (18) aux fins de la définition de la pression de consigne du système (pₛₒₗₗ).

2. Système d'entraînement hydraulique selon la revendication 1, dans lequel la commande définit la pression de consigne du système en fonction des exigences de puissance et/ou de couple relatives au moteur hydraulique à régulation secondaire.

3. Système d'entraînement hydraulique selon la revendication 1 ou 2, dans lequel la commande définit la pression de consigne du système sur la base d'un paramètre de fonctionnement qui est fourni par la régulation secondaire du moteur hydraulique et sur la base de l'angle de réglage du moteur hydraulique à régulation secondaire réglable.

4. Système d'entraînement hydraulique selon l'une des revendications précédentes, dans lequel la commande définit la pression de consigne du système à au moins deux niveaux de pression différents.

5. Système d'entraînement hydraulique selon la revendication 4, dans lequel la commande passe d'un premier niveau de pression à un deuxième niveau de pression quand le paramètre de fonctionnement atteint une valeur déterminée.

6. Système d'entraînement hydraulique selon la revendication 4 ou 5, dans lequel la commande passe d'un niveau de pression normale à un niveau de haute pression quand l'angle de réglage du moteur hydraulique à régulation secondaire réglable atteint une valeur déterminée, en particulier l'angle de réglage maximal dans une direction de réglage.

7. Système d'entraînement hydraulique selon l'une des revendications 4 à 6, dans lequel la commande passe d'un niveau de haute pression à un niveau de pression normale quand l'angle de réglage du moteur hydraulique à régulation secondaire réglable descend en dessous d'une valeur déterminée.

8. Système d'entraînement hydraulique selon l'une des revendications précédentes, dans lequel il est prévu au moins un générateur de signaux qui donne un signal d'indicateur à la commande quand l'angle de réglage du moteur hydraulique à régulation secondaire réglable atteint une valeur déterminée, en particulier l'angle de réglage maximal dans une direction de réglage.

9. Système d'entraînement hydraulique selon la revendication 8, dans lequel il est prévu au moins deux générateurs de signaux, en particulier pour l'angle de réglage maximal dans les deux directions de réglage.

10. Système d'entraînement hydraulique selon l'une des revendications précédentes, comprenant au moins un réservoir à haute pression qui est relié ou peut être relié avec le circuit hydraulique à partir de la pompe hydraulique et du moteur hydraulique.

11. Système d'entraînement hydraulique selon la revendication 10, comprenant au moins deux réservoirs à haute pression qui peuvent être reliés en alternance avec le circuit hydraulique au moyen de la commande.

12. Système d'entraînement hydraulique selon la revendication 11, dans lequel les réservoirs à haute pression présentent des niveaux de pression différents et sont reliés avec le circuit hydraulique par la commande en fonction de la pression de consigne du système définie.

13. Système d'entraînement hydraulique selon l'une des revendications précédentes, dans lequel la commande est réalisée à partir d'éléments de commutation simples.

14. Système d'entraînement hydraulique selon l'une des revendications précédentes réalisé en tant que transmission hydrostatique destinée à l'entraînement d'un véhicule, en particulier une machine de travail mobile.

15. Véhicule, en particulier machine de travail mobile, comprenant un système d'entraînement hydraulique selon l'une des revendications précédentes.
